# EUROPÄISCHE PATENTSCHRIFT

(11) **EP 0 829 007 B1**
(45) Veröffentlichungstag und Bekanntmachung des Hinweises auf die Patenterteilung: **18.09.2002**
(21) Anmeldenummer: 96905668.8
(22) Anmeldetag: 28.03.1996
(51) Int. Cl.: G01N 22/04

(54) **VERFAHREN UND VORRICHTUNG ZUR KONTINUIERLICHEN ERFASSUNG DER FEUCHTIGKEIT EINES SCHÜTTGUTES**
PROCESS AND DEVICE FOR CONTINUOUSLY DETECTING THE DAMPNESS OF A BULK MATERIAL
PROCEDE ET DISPOSITIF DE DETECTION CONTINUE DE L'HUMIDITE D'UN PRODUIT EN VRAC

(30) Priorität: 29.05.1995 CH 157795
(43) Veröffentlichungstag der Anmeldung: 18.03.1998
(73) Patentinhaber: BÜHLER AG, 9240 Uzwil (CH)
(72) Erfinder: TOBLER, Hans, CH-9249 Algetshausen (CH); LEHMANN, Roger, CH-9202 Gossau (CH); MÜLLER, Roman, CH-9244 Niederuzwil (CH)
(74) Vertreter: Frommhold, Joachim, Dr.
(86) Internationale Anmeldenummer: CH9600111
(87) Internationale Veröffentlichungsnummer: WO96038721

(56) Entgegenhaltungen:
- EP-A- 0 249 738
- WO-A-90/07110
- DE-A- 3 413 852
- US-A- 4 485 284
- TECHNISCHES MESSEN ATM, Bd. 61, Nr. 11, November 1994, MUNCHEN DE, Seiten 409-420, XP000479785 K. KUPFER: "MIKROWELLENFEUCHTEMESSGERÄTE UND IHR EINSATZ IN DER PROZESSTECHNIK"
- TECHNISCHES MESSEN ATM, Bd. 59, Nr. 3, März 1992, MUNCHEN DE, Seiten 110-115, XP000297911 K. KUPFER ET AL.: "MATERIALFEUCHTEMESSUNG MIT MIKROWELLEN"
- TECHNISCHES MESSEN ATM, Bd. 60, Nr. 1, Januar 1993, MUNCHEN DE, Seiten 19-28, XP000329666 K. KUPFER: "STÖRGRÖSSEN BEI DER APPLIKATION VON MIKROWELLENFEUCHTEMESSVERFAHREN"

## Beschreibung

Die Erfindung betrifft ein Verfahren sowie eine Vorrichtung zur kontinuierlichen Erfassung der Feuchtigkeit eines Schüttgutes, zum Beispiel von Nahrungs- oder Futtermittelkomponenten, in einem Messkanal mit einem Sensor für Mikrowellen.

In jüngerer Vergangenheit sind viele Vorschläge gemacht worden für die kontinuierliche Feuchtigkeitsmessung von Schüttgütern mittels Mikrowellen. Im Bereich der Mühlenindustrie konnte in einem gewissen Umfang die Methode mittels Hornantennen Eingang in die Praxis finden. Dabei ist es allerdings erforderlich, gleichzeitig die Dichte des Schüttgutes zu erfassen. Gemäss der US-PS 4,131,845 wird für die Dichtemessung eine γ-Strahlenmessung vorgeschlagen. Soweit bekannt ist, lassen sich damit brauchbare Resultate erzielen. Nachteilig sind die γ-Strahlen, da sie, teils gesetzlich vorgeschrieben, besondere Vorsichtsmassnahmen erfordern.

Gemäss der EP-PS 249 738 wird die Dichte eines Schüttgutes über Gewichtsmesswertaufnehmer ermittelt. Der Messkanal wird für eine Gesamtstromerfassung an Produkt auf Wägeelementen angeordnet und die transmittierten Mikrowellen werden über je zwei gegenüberliegenden Hornantennen gemessen, wobei eine solche Messung unzuverlässig ist. Zudem erfolgt die Feuchtigkeitsmessung nur vor dem Netzen.

Um zu verhindern, dass störende Mikrowellenreflexionen von den Umfassungswänden auftreten, werden diese Wände aus mikrowellen-absorbierendem Schaumstoff hergestellt. Nach innen wird der Schaumstoff zusätzlich mit einem mikrowellendurchlässigen Material abgedeckt, damit das Messgut, zum Beispiels das Nahrungsmittel, nicht mit dem Schaumstoff in Berührung kommt. Eine grössere Verbreitung dieses Messverfahrens ist in der Praxis nicht bekannt geworden. Es ist zu vermuten, dass das exakte Verhältnis von Reflexion und Absorption der Mikrowellen unbestimmbar ist und deshalb eine grosse Fehlerquelle darstellt.

Bekannt ist die Anwendung von Mikrowellen mittels des sogenannten Resonator-Typs, wie sie z.B. in EP-B-468 023 oder EP-A-669 522 beschrieben ist. Je nach Produkt sind verschiedene Resonanzfrequenzen erforderlich, die Genauigkeit ist begrenzt.

Anhand der FR-A-22 05 196 sowie einer Fachveröffentlichung (J. of Microwave Power, 1504, 1980, page 209-220, A.K.: Microwave aquametry - a review) ist die kontinuierliche Erfassung der Feuchtigkeit eines Schüttgutes im on-line Betrieb, einschliesslich Nahrungs- und Futtermittelkomponenten mittels Mikrowellenfeld als bekannt anzusehen. Es wird hierbei ein Mikrowellenfeld erzeugt und Betrag und Phase der transmittierten Mikrowellen im Schüttgut gemessen, daraus die Feuchtigkeit errechnet und mit dem errechneten Wert wird die Feuchtigkeit des Schüttgutes geregelt. Eine Berücksichtigung weiterer Parameter erfolgt nicht. Die FR-A-22 05 196 zeigt dabei einen Messkanal mit einem Sensor, der einen Stab quer zur Produktflussrichtung aufweist.

In einer weiteren Fachveröffentlichung (technisches Messen, Jahrgang 61 (1994), November, Nr. 11, S. 409-420, K.K.: Mikrowellen-Feuchtmessgeräte und ihr Einsatz in der Prozesstechnik) zeigt weitergehende Ausführungen zur Feuchtemessung mittels Mikrowellen. Hervorgehoben wird hierbei auch, dass das Hauptproblem der Feuchtemessung für Automatisierungszwecke in der richtigen Auswahl des Messverfahrens für das jeweilige Messgut liegt. Ebenso, dass Messabweichungen, die die Dämpfung beeinflussen durch die grobe Körnung des Schüttgutes entstehen. Es werden daher bestimmte Anforderungen an das Messgut bzw. die Probevorbereitung gestellt, um im Messraum des Mikrowellensensors die nachfolgenden Eigenschaften zu gewährleisten:
- gleichmässig Oberfläche
- Vorverdichtung des Schüttgutes
- Homogenität der Feuchte
- konstanter Durchfluss
- konstante Eigenschaften der Granulation.

Dies zeigt diverse Einschränkungen vorhandener Mikrowellen-Feuchtemess-geräte, insbesondere auch für körnige Schüttgüter auf.

Gemäss der WO 90/07110 wurde versucht, den Betrag und die Phase der transmittierten Mikrowellen um Schüttgut zu messen, und daraus die Feuchtigkeit des Messgutes zu errechnen. Für die Erzeugung des Mikrowellenfeldes wurde eine das Schüttgut in dem Messkanal durchdringende Antenne verwendet. Bevorzugt wurde das Mikrowellenfeld im letzten Abschnitt einer Verfahrenszone erzeugt und gleichzeitig die Temperatur des Schüttgutes ermittelt. Viele Versuchsreihen hatten ergeben, dass eine entsprechende Feuchtigkeitsmessung stark sortenabhängig ist. Bekanntlich werden aber gerade in Mühlenanlagen verschiedene Getreidearten bzw. -sorten, besonders aber verschiedene Getreidemischungen verarbeitet. Bei der erstmaligen Verarbeitung einer neuen Getreidemischung kennt man deshalb die relevanten Produkteigenschaften für die Mikrowellenmessung nicht, so dass zumindest nach jedem Produktwechsel, mit unbekanntem Produkt, eine neue Eichung der Messeinrichtung vorgenommen werden musste. Es gelang bisher nicht, dieses Problem über eine geräteinterne, automatische Eichung zu lösen. Vielmehr musste, um die erforderliche Genauigkeit von z.B. ±0,2% Fehlerabweichung für den Wassergehalt zu erreichen, zusätzlich für jede Eichung eine Labormessung durchgeführt werden. Damit konnte aber das Ziel der (automatischen) on-line Feuchtigkeitsmessung nur teilweise erreicht werden. Es ist bekannt, dass im Gegensatz etwa zu einem kapazitiven Messverfahren, die Mikrowellenmessung eine exakte Ermittlung des Wassergehaltes von frisch genetztem Weizen, unmittelbar nach der Wasserzugabe erlaubt. Eine echte Regelung in einem geschlossenen Regelkreis für die genaue Wasserzugabe muss auf der Messung der Feuchtigkeit bzw. des Wassergehaltes nach der Wasserzugabe basieren. Alle Versuche in der Vergangenheit bestätigen, dass ein Problem der Sortenabhängigkeit besteht, und dass der Zeitfaktor von der Wasserzugabe bis zur Wassergehaltsbestimmung das Messergebnis beeinflusst. Da in der Mahlvorbereitung dem Getreide im Regelfall zwei- oder sogar dreimalig Wasser zugegeben wird, war es nicht möglich, dieses Problem mit den bisher bekannten Verfahren befriedigend zu lösen.

Der Erfindung wurde nun die Aufgabe gestellt, die Nachteile der bekannten Lösungen möglichst weitgehend zu beseitigen, eine Mikrowellenmessung zu entwickeln, die in der Praxis auch bei Sortenwechsel einfach anwendbar ist, und insbesondere die Messung von frisch genetztem Weizen und darauf basierend eine echte Regelung der Wasserzugabe, z.B. auf einen bestimmten Sollwert, erlaubt.

Eine weitere ergänzende Messung des Feuchtigkeitsgehaltes vor dem Netzen kann ebenfalls in bekannter Weise erfolgen.

Die erfindungsgemässe Lösung ist dadurch gekennzeichnet, dass der Sensor als Triplate-Leitung ausgebildet und die Leitungseigenschaften des mit Schüttgut gefüllten Sensors gemessen werden, wobei der Sensor vorzugsweise als Teil des Messkanales ausgebildet ist.

Bisher wurden Mikrowellenmesstechniken mehrheitlich in der chemischen Verfahrenstechnik, besonders aber auch bei der Wassergehaltsbestimmung von Feststoffen, wie Holz-, Papier-, Textil-Bahnen usw. angewendet. Technisch bedingt fand dabei die sog. Hohlantenne die grösste Verbreitung. Diese wurde in den genannten Fachgebieten zu hoher Entwicklungsreife gebracht.

Bekannt sind die vorgenannte Gobosensor-Methode (WO90/07110) sowie die Resonator-Methode. Nach der Gobosensor-Methode wie vorbeschrieben, wurde die Schüttdichte jedoch nicht mit erfasst, so dass das Ergebnis ungenau blieb. Überraschenderweise hat sich nun aber gezeigt, dass mit der Anwendung der sog. Triplateleitung, bei welcher mit Schüttgutfüllung die Leitungseigenschaften gemessen werden, entscheidende Störgrössen eliminiert werden, insbesondere der Problemkreis der von Mikrowellenreflexion und Mikrowellenabsorption herrührt. Die bisherige Hauptschwierigkeit, nämlich die Sortenabhängigkeit, kann als Fehlerquelle weitgehend ausgeschaltet werden. Die Messresultate sind nun, unabhängig vom Zeitfaktor, zwischen der Netzung des Getreides und der Messung, exakt reproduzierbar.

Eine solche Einbeziehung des Schüttgewichtes, neben der Durchsatzmenge und Temperatur, ermöglicht erst eine zuverlässige, sortenunabhängige Feuchtigkeitsermittlung und letztendlich -regelung und ist aus dem bekannten Stand der Technik nicht in naheliegender Weise ableitbar.

Die Erfindung erlaubt eine ganze Anzahl besonders vorteilhafter Ausgestaltungen. Vorzugsweise erfolgt die Erfassung der Leitungseigenschaft über das heterodyne Messprinzip mittels einer Mikrowellenmesseinheit, wobei über eine Auswertelektronik zusammen mit anderen Messgrössen die Produktfeuchtigkeit errechnet wird. Zur Eichung bzw. zur Erhöhung der Messgenauigkeit, z.B. zur Ausschaltung von Temperatur- und Längenänderungen wird parallel zu dem Sensor eine Referenzleitung periodisch zugeschaltet. Als ganz besonders vorteilhafte Ausgestaltung wird ferner die Triplate-Leitung als Teil eines von festen Anlageteilen wägetechnisch getrennten Messkanales ausgebildet, so dass über entsprechende Wägesignale die Produktdichte ermittelt werden kann. Es hat sich gezeigt, dass in einigen Fällen die Dichtmessung des Schüttgutes nicht notwendig ist. Versuche haben aber bestätigt, dass die Messicherheit mit der gleichzeitigen Feststellung der Schüttgutdichte erhöht wird, ganz besonders zur noch besseren Beherrschbarkeit der Messungen auch bei extremen Abweichungen bezüglich der Art des Schüttgutes, z.B., wenn es sich um körniges, griessiges, flockiges oder mehliges Schüttgut aus unterschiedlichen Rohmaterialien bzw. Getreidesorten handelt.

Die neue Erfindung betrifft ferner eine Vorrichtung zur kontinuierlichen Erfassung der Feuchtigkeit eines Schüttgutes im on-line-Betrieb, insbesondere für Nahrungsoder Futtermittel, mit einem Messkanal für die Durchleitung des Schüttgutes, sowie einem Rückstauelement an der Austrittsseite des Messkanals, welcher in der Stauzone einen Mikrowellen-Sensor aufweist, und ist dadurch gekennzeichnet, dass der Messkanal als Triplate-Leitung ausgebildet ist.

Bevorzugt ist der Messkanal ein Wägeabschnitt, welchem ein steuerbares Austrageelement für das Schüttgut zugeordnet wird. Dabei wird der Wägeabschnitt vorteilhafterweise als Hebelwaage ausgebildet, wobei die Auswerteelektronik sowie ein Antriebsmotor für das Austragelement auf der einen und der Messkanal auf der anderen Seite des Hebels wirkend angeordnet sind. An dem Hebel kann zusätzlich ein verstellbares Gegengewicht angeordnet werden, zur vollständigen Austarierung der Messeinrichtung mit einem bestimmten Schüttgut.

Ferner wird vorgeschlagen, dass der Messkanal über der Höhe in zwei Abschnitte aufgeteilt wird, in einen oberen Messabschnitt sowie einen nach unten anschliessenden Austragabschnitt, wobei der Messabschnitt von oben nach unten erweitert, und der Austragabschnitt von oben nach unten verengt ausgebildet ist, wobei der austragabschnitt nach unten durch einen Schneckenaustragdosierer begrenzt ist.

Die Verbindungsleitung von dem Sensor zu der Auswerteelektronik ist eine Koaxialleitung, wobei ein Übergangstrichter für die reflexionsfreie Anpassung des Wellenwiderstandes des Kabels an den Sensor sorgt. Der für die Mikrowellen wirksame Teil des Messkanals ist aus Metall hergestellt. Der Übergangstrichter im Übergang auf das Innere des Messkanales soll durch eine mikrowellendurchlässige Schicht abgedeckt sein. Bevorzugt wird der Messkanal als Bypassleitung zu einer schrägliegenden oder versetzt angeordneten Produkthauptleitung und die Eintrittsöffnung von der Produkthauptleitung in den Messkanal rostartig ausgebildet.

Die Erfindung betrifft ferner eine Messeinrichtung zur kontinuierlichen Erfassung der Feuchtigkeit eines Schüttgutes im on-line-Betrieb, insbesondere für Nahrungsoder Futtermittel, mit einem Messkanal für die Durchleitung des Schüttgutes, sowie einem Rückstauelement an der Austrittsseite des Messkanales, welcher in der Stauzone innerhalb des Messkanales einen Stab quer zur Produktflussrichtung aufweist, und ist dadurch gekennzeichnet, dass die Messeinrichtung als Waage, vorzugsweise als Hebelwaage ausgebildet ist. Bevorzugt wird das Gewichtssignal über eine Druckmessdose gemessen, wobei aus dem Signal die Dichte errechnet wird.

Im weiteren können Amplituden und/oder Phasen des Mikrowellentransmissionssignals gemessen werden.

In der Folge wird die Erfindung anhand von einigen Ausführungsbeispielen mit weiteren Einzelheiten erläutert. Es zeigen:
- Fig. 1: einen Schnitt durch eine erfindungsgemässe Mikrowellenmesseinrichtung;
- Fig. 2: einen Schnitt II - II der Fig. 1;
- Fig. 3: das Grundkonzept einer Triplate-Leitung;
- Fig. 4: ein Blockschaltbild eines heterodynen Mess-Systems;
- Fig. 5: eine besondere Ausgestaltung der Fig. 4;
- Fig. 6: eine vollständige Netzeinrichtung z.B. für Getreide;
- Fig. 7: schematisch die Basiselemente der Wassermengenregelung.

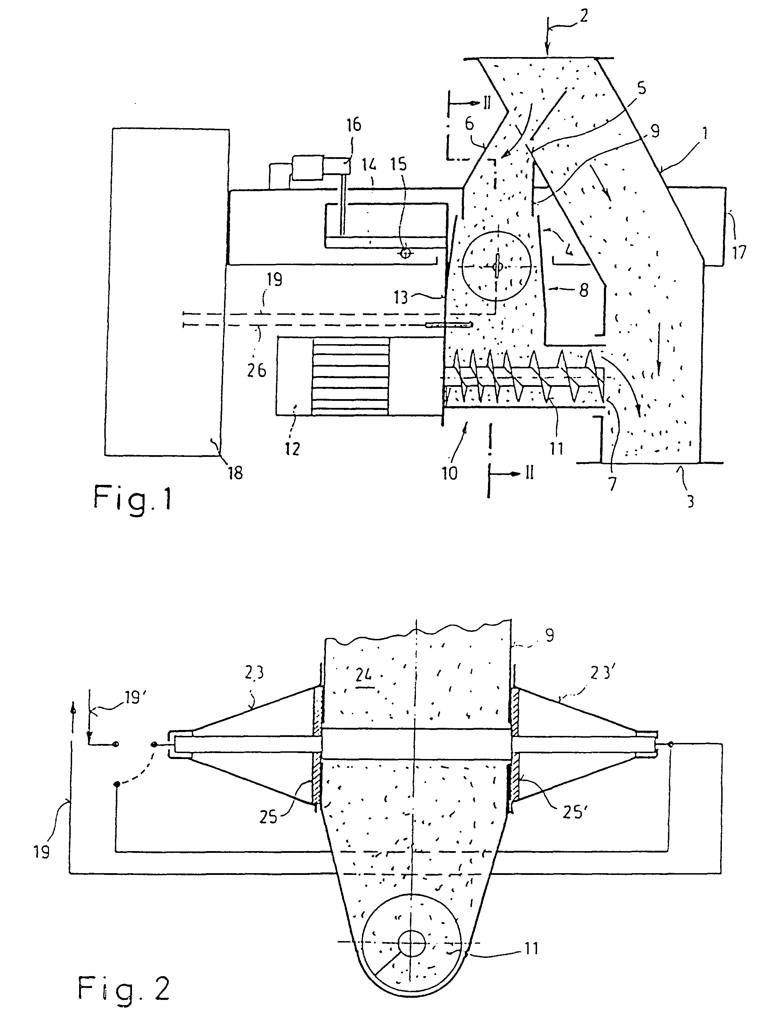

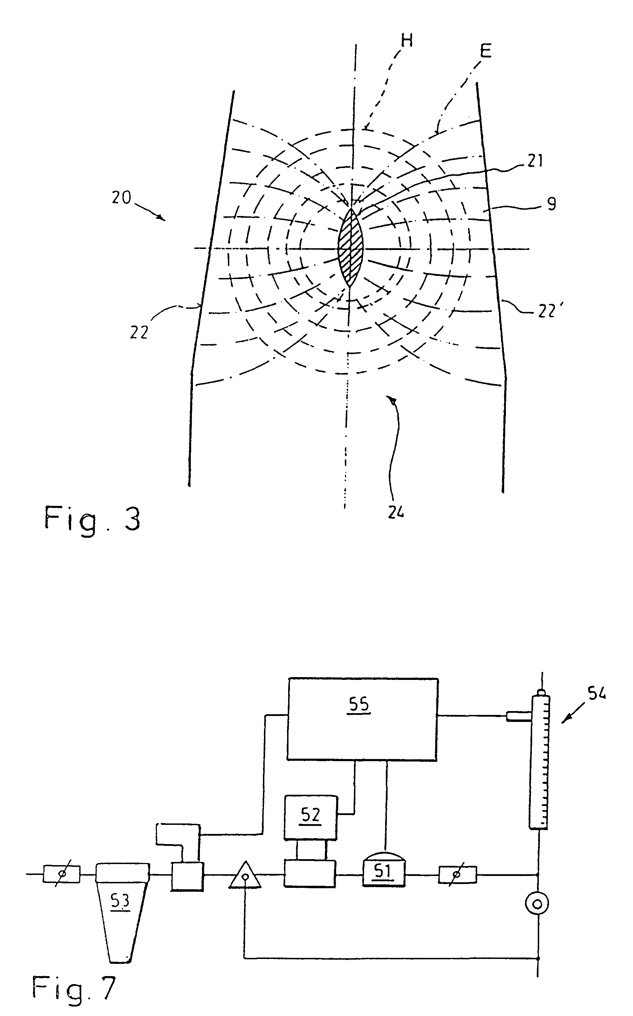

Es wird nun auf die Fig. 1 und 2 Bezug genommen. An einem Produkthauptkanal 1, bei dem das Schüttgut über einen Einlauf 2 zugeführt und über einen Auslauf 3 abgeführt wird, ist gegen die linke Hälfte ein Bypass 4 über einen Gitterrost 5 angeschlossen. Durch ein feststehendes Abzweigrohrstück 6 wird bevorzugt Schüttgut in den Ba-Pass 4 gelenkt und über ein horizontales Rohrstück 7 wieder in den Produkthauptkanal 1 zurückgeleitet. Die eigentliche Messstrecke 8 beginnt mit dem unteren Ende des Abzweigrohrstückes 6 und ist begrenzt mit dem Austragende des Rohrstückes 7. Die Messstrecke 8 besteht aus einen senkrechten Messkanal 9 sowie einem Austragsdosierer 10, welcher einen Schneckenförderer 11 sowie einen Antriebsmotor 12 aufweist. Die Messstrecke 8 ist oben und unten wägetechnisch von dem Produkthauptkanal 1 getrennt, so dass entsprechende Wägebewegungen von der Messstrecke 8 ungehindert möglich sind. Die Messstrecke 8 ist über eine senkrechte Stütze 13 und einem horizontalen Hebel 14 an einem schneidenartigen Drehpunkt 15 aufgehängt. Der Hebel 14 ist mit einem Kraftaufnehmer 16 kräftemässig verbunden. Von der Auswertelektronik 18 ist eine mit ihr verbundene Koaxialleitung 19, 19' zu einem Sensor 20 geführt, welcher aus einem Stab 21, der das Schüttgut durchdringt sowie wenigstens zwei metallischen Wandteilen 22 bzw. 22', z.B. aus Stahl, besteht (Fig. 3), so dass während der Messung in dem Messkanal 9 ein magnetisches Feld H sowie ein elektrisches Feld E entsteht, in direkter Zuordnung zu den elektrischen Leitern, Stab 21 bzw. 22 und 22'.

Mittels eines Temperaturfühlers 26 wird die Temperatur des Schüttgutes ermittelt.

Aus der Fig. 2 ist ersichtlich, dass die beiden Koaxialleitungen 19 bzw. 19' analog zu den Hornantennen eine trichterförmige Erweiterung 23, 23' aufweisen, zur Anpassung des Wellenwiderstandes, z.B. von 50 ö des Koaxialkabels auf 130 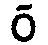 in dem Bereich des Dielektrikums 24, das durch das Schüttgut gebildet wird. Beide trichterförmigen Erweiterungen 23 bzw. 23' sind gegen den Messkanal 8 durch eine mikrowellendurchlässige Schicht 25 bzw. 25' abgedeckt. Über einen Schalter 30 kann eine Referenzleitung 31 zugeschaltet werden.

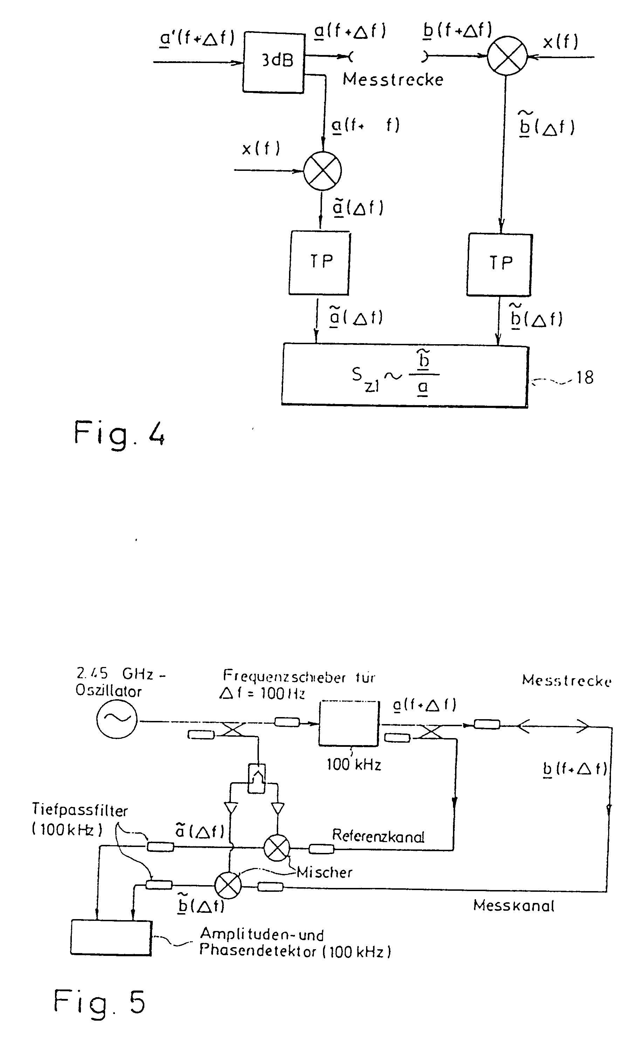

Die Fig. 4 zeigt in allgemeiner Beschreibung ein Blockschaltbild eines heterodynen Mess-Systems. Das Mikrowellen-Eingangssignal a(f+Δf) wird auf die Messstrecke geführt und wie auch das Ausgangssignal b(f+Δf) abwärts gemischt. Somit kann eine einfache Phasen- und Amplitudenmessung im ZF-Bereich durchgeführt werden. Die Information (Amplitude und Phase) geht dabei nicht verloren (Mikrowelle und abwärtsgemischtes Signal sind proportional).

Die Fig. 5 zeigt eine konkretere Ausgestaltung des Mess-Systems gemäss Fig. 4. Das Mikrowellen-Eingangssignal a(f+Δf) am Eingang der Messstrecke wird durch einen Frequenzschieber (Einseitenbandmodulator) erzeugt. Wiederum wird Einund Ausgang der Messstrecke abwärtsgemischt und in einer Auswerteeinheit verarbeitet. Eine weitere Möglichkeit, ein heterodynes System zu realisieren, wäre eine Variante mit einem PLL (Phase Locked Loop). In diesem Fall wird nicht das Mikrowellen-Eingangssignal der Teststrecke um die ZF-Frequenz verschoben, sondern das Mischersignal X wird durch einen PLL auf f+Δf gehalten. Der Mischerausgang liefert somit wieder die ZF-Signale, die weiterverarbeitet werden.

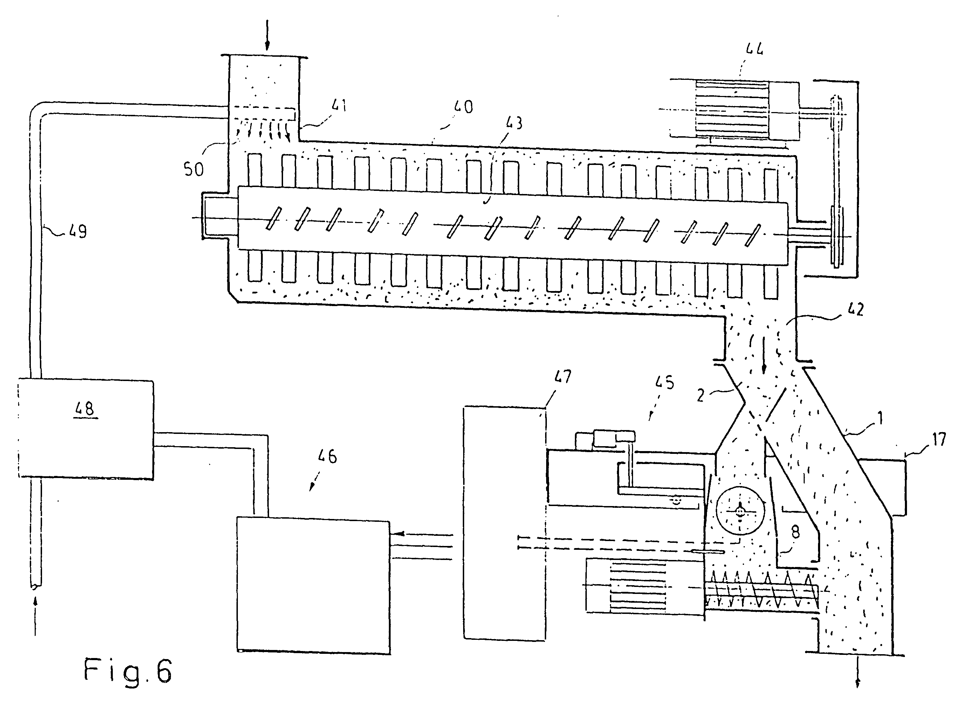

In der Folge wird nun auf die Fig. 6 Bezug genommen, welche die vollständige Netzeinrichtung zeigt. Ein Netzaggregat 40, bei welchem über einen Zulauf 41 z.B. trockenes Getreide zugeführt wird, ist über dessen Auslauf 42 direkt mit dem Einlauf des Produkthauptkanales 1 verbunden. Das Netzaggregat 40 weist einen oder mehrere umlaufende Schleuderrotoren 43 auf, welche von einem Antriebsmotor 44 angetrieben sind. Die Mikrowellenmesseinrichtung 45 ist an entsprechende Mess-Signale einer Steuereinheit 47 der Mikrowellenmesseinrichtung 45 über einen Soll-Ist-Vergleich ausgewertet und als Steuersignal einer Wasserdosiereinheit 48 zugeführt wird, welche die erforderliche Wassermenge regelt und über eine Wasserleitung 49 sowie ein Wassereinspritzrohr 50 dem Schüttgut zugibt. Die Steuerung und Regelung der Wassermenge ist in der Fig. 7 schematisch in an sich bekannter Weise mit den Hauptkomponenten wie Wasserzähler 51, Steuerelektronik 55, Motorregelventil 52, Filter 53 und Bypass 54 in grösserem Massstab dargestellt.

### Verzeichnis der Bezugszeichen

- 1: Produkthauptkanal
- 2: Einlauf
- 3: Auslauf
- 4: Bypass
- 5: Gitterrost
- 6: Abzweigrohrstück
- 7: Rohrstück
- 8: Messstrecke
- 9: Messkanal
- 10: Austragsdosierer
- 11: Schneckenförderer
- 12: Antriebsmotor
- 13: Stütze
- 14: Hebel
- 15: Drehpunkt
- 16: Kraftaufnehmer
- 17: Platte
- 18: Auswerteelektronik
- 19: Koaxealleitung
- 19': Koaxealleitung
- 20: Sensor
- 21: Stab
- 22: Wandteil
- 22': Wandteil
- 23: Erweiterung
- 23': Erweiterung
- 24: Dielektrikum
- 25: Schicht
- 25': Schicht
- 26: Temperaturfühler

- 40: Netzaggregat
- 41: Zulauf
- 42: Auslauf
- 43: Schleuderrotor
- 44: Antriebsmotor
- 45: Mikrowellenmesseinrichtung
- 46: Kontrollgerät
- 47: Steuereinheit
- 48: Wasserdosiereinheit
- 49: Wasserleitung
- 50: Wassereinspritzrohr
- 51: Wasserzähler
- 52: Motorregelventil
- 53: Filter
- 54: Bypass
- 55: Steuerelektronik

- H: Feld
- E: Feld
- X: Mischersignal
- a: Eingangssignal
- b: Ausgangssignal

## Patentansprüche

1. Verfahren zur kontinuierlichen Erfassung der Feuchtigkeit eines Schüttgutes, z.B. von Nahrungs- oder Futtermittelkomponenten in einem Messkanal, mit einem Sensor für Mikrowellen, wobei Betrag und/oder Phase der transmittierten Mikrowellen im Schüttgut gemessen werden und mit dem errechneten Wert die Feuchtigkeit des Schüttgutes bestimmt wird,
**dadurch gekennzeichnet, dass** der Sensor (20) als eine Triplate-Leitung ausgebildet und die Leitungseigenschaften des mit Schüttgut gefüllten Sensors (20) gemessen werden, wobei der Sensor als Teil einer auslaufseitig mit einem Rückstauelement versehenen Messstrecke (8) ausgebildet wird, und über eine Auswerteelektronik (18) zusammen mit der Temperatur und Schüttdichte des Schüttgutes, eine jeweilige Produktfeuchtigkeit ermittelt und nachfolgend geregelt wird.

2. Verfahren nach Patentanspruch 1, **dadurch gekennzeichnet, dass** das Erfassen der Leitungseigenschaften über ein heterodynes Messprinzip mittels einer Mikrowellenmesseinheit (45) erfolgt.

3. Verfahren nach Patentanspruch 1 und 2, **dadurch gekennzeichnet, dass** zu einer periodischen Eichung bzw. zur Erhöhung der Messgenauigkeit parallel zu dem Sensor (20) eine Referenzleitung zuschaltbar ist, z.B. zur Ausschaltung von Temperatur- und Längenänderungen.

4. Verfahren nach einem der Patentansprüche 1 bis 3, **dadurch gekennzeichnet, dass** der Sensor (20) bzw. die Triplate-Leitung als Teil eines von festen Anlageteilen wägetechnisch getrennten Messkanales (9) der Messstrecke (8) ausgebildet ist und über entsprechende Wägesignale die Produktdichte (Schüttdichte) des Schüttgutes gemessen wird.

5. Vorrichtung zur kontinuierlichen Erfassung der Feuchtigkeit eines Schüttgutes, insbesondere für Nahrungs- oder Futtermittel im on-line-Betrieb, nach einem der Patentansprüche 1 bis 4, mit einem Messkanal (9) für die Durchleitung des Schüttgutes sowie einem Rückstauelement an der Austrittsseite des Messkanals (9), welcher einen Stab (21) als Teil eines Sensors (20) quer zur Produktflussrichtung aufweist, wobei Mittel (26) zum Messen der Leitungseigen schaften des mit Schüttgut gefüllten Sensors (20) bzw. Messkanales (9), Mittel zur Temperaturermittlung, eine Auswerteelektronik und Mittel zum Messen des Wertes von Betrag und/oder Phase transmittierter Mikrowellen im Schüttgut vorhanden sind, **dadurch gekennzeichnet, dass** der Messkanal (9) in Form eines Bypasses (4), als Triplate-Leitung ausgebildet ist, und dass weiterhin der Messkanal (9) als, von einem Produkthauptkanal und weiteren festen Elementen wägetechnisch getrennter, Waagenabschnitt ausgebildet ist.

6. Vorrichtung nach Anspruch 5, **dadurch gekennzeichnet, dass** dem Messkanal (9) auslaufseitig ein Austragelement (10, 11) zum zwangsweisen Austragen des Schüttgutes zugeordnet ist.

7. Vorrichtung nach Patentanspruch 6, **dadurch gekennzeichnet, dass** der Wägeabschnitt als Hebelwaage ausgebildet ist, wobei ein Antriebsmotor (12) für das Austragelement auf der einen Seite und der Messkanal (9) auf der anderen Seite eines Hebels (14) der Hebelwaage wirkend, angeordnet sind.

8. Vorrichtung nach einem der Patentansprüche 5 bis 7, **dadurch gekennzeichnet, dass** der Messkanal (9) vertikal in zwei Abschnitte aufgeteilt ist, in einen oberen Messabschnitt sowie einen nach unten anschliessenden Austragsabschnitt, wobei der Messabschnitt von oben nach unten erweitert und der Austragsabschnitt von oben nach unten verengt ausgebildet ist, und wobei der Austragabschnitt nach unten durch einen Schneckenaustragsdosierer (10) begrenzt ist.

9. Vorrichtung nach einem der Patentansprüche 5 bis 8, **dadurch gekennzeichnet, dass** eine Verbindungsleitung von dem Sensor (20) zu der Auswertelektronik, über die in Verbindung mit Temperatur und Schüttdichte des Schüttgutes dessen Feuchtigkeit bestimmt und nachfolgend geregelt wird, als Koaxialleitung (19, 19') ausgebildet ist, mit einem Übergangstrichter für eine reflexionsfreie Anpassung des Wellenwiderstandes des Kabels der Koaxialleitung (19, 19') an den Sensor (20).

10. Vorrichtung nach Patentanspruch 9, **dadurch gekennzeichnet, dass** der Messkanal (9) aus Metall hergestellt ist, und der Übergangstrichter im Übergang auf den Messkanal (9) durch eine mikrowellendurchlässige Schicht (25, 25') abgedeckt ist.

11. Vorrichtung nach einem der Patentansprüche 5 bis 10, **dadurch gekennzeichnet, dass** der Messkanal (9) als Bypassleitung (4) zu einem schrägliegenden oder versetzt angeordneten Produkthauptkanal (1) und die Eintrittsöffnung von dem Produkthauptkanal (1) in den Messkanal (9) rostartig ausgebildet ist.

## Claims

1. A procedure for continuously measuring the moisture of a bulk material, e.g. food or feed components, in a measuring channel with a sensor for microwaves, whereby the strength and/or phase of the transmitted microwaves in the bulk material is measured, and the moisture of the bulk material is determined by the calculated value, **characterized in that** the sensor (20) is designed as a triplate line, and the conductive properties of the sensor (20) filled with bulk material are measured, whereby the sensor is designed as a part of an outlet-side measuring path (8) provided with a retention element, and the respective product moisture is measured (along with these temperature and bulk density of the bulk material) and subsequently controlled by means of evaluation electronics (18).

2. The procedure according to claim 1, **characterized in that** the conducting properties are measured using a heterodyne measurement procedure by means of a microwave measuring unit (45).

3. The procedure according to claims 1 and 2, **characterized in that** is a reference line can be connected parallel to the sensor (20) for periodic calibration or to increase the measuring precision and, e.g. to exclude temperature and length changes.

4. The procedure according to one of claims 1 to 3, **characterized** that the sensor (20) or the triplate line is designed as a part of a measuring channel (9) of the measuring path (8) separate from fixed scale components, and the product density (bulk density) of the bulk material is measured by means of corresponding weighing signals.

5. A device to continuously measure the moisture of a bulk material especially for food or feed in on-line operation according to one of claims 1 to 4, with a measuring channel (9) for conducting the bulk material and a retention element at the exit side of the measuring channel (9) that has a rod (21) as a part of a sensor (20) perpendicular to the product flow, whereby the following are provided: Means (26) to measure the conductive properties of the sensor (20) or measuring channel (9) filled with the bulk goods, means to measure temperature, evaluation electronics, and means to measure the strength and/or phase of transmitted microwaves in the bulk material, **characterized** that the measuring channel (9) is designed in the form of a bypass (4) as a triplate line, and that the measuring channel (9) is designed as a scale section separate from a main product channel and other fixed elements.

6. The device according to claim 5, **characterized in that** the measuring channel (9) is designed a discharge element (10, 11) at the outlet side to forcibly discharge the bulk material.

7. The device according to claim 6, **characterized in that** the scale section is designed as a beam scale, whereby the drive motor (12) for the discharge element is on one side of a beam (14) of the beam scale and the measuring channel (9) is on the other side.

8. The device according to one of claims 5 to 7, **characterized** that the measuring channel (9) is vertically divided in two sections (a top measuring section followed by a bottom discharge section), whereby the measuring section expands from top to bottom, and the discharge section narrows from top to bottom, and where the discharge section is delimited at the bottom by a screw feed (10).

9. The device according to one of claims 5 to 8, **characterized in that** there is a connecting line designed as a coaxial line (19, 19') running from the sensor (20) to the evaluation electronics by means of which the moisture of the bulk material is measured in connection with the temperature and bulk density and then controlled, and there is a transition funnel for the reflection-free adaptation of the characteristic impedance of the cable of the coaxial line (19, 19') to the sensor (20).

10. The device according to claim 9, **characterized in that** the measuring channel (9) is made of metal, and the transition funnel is covered with a coating (25, 25') transparent to microwaves at the transition to the measuring channel (9).

11. The device according to one of claims to 5 to 10, **characterized in that** the measuring channel (9) is designed as a bypass line (4) to an angled or offset main product channel (1), and the inlet opening from the main product channel (1) to the measuring channel (9) is designed as a grid.

## Revendications

1. Procédé de détermination continue de l'humidité d'un produit en vrac, p.ex. de composants de produits alimentaires pour humains ou animaux, dans un canal de mesure, comprenant un capteur pour micro-ondes, la somme et/ou la phase des micro-ondes transmises dans le produit en vrac étant mesurée et l'humidité du produit en vrac étant déterminée sur la base de la valeur calculée, **caractérisé en ce que** le capteur (20) est réalisé sous forme de conduite à trois plaquettes et les propriétés conductrices du capteur (20) rempli du produit en vrac sont mesurées, le capteur étant réalisé sous forme de trajet de mesure (8) équipé côté sortie d'un élément de retenue et **en ce qu'**une humidité du produit est déterminée et ensuite réglée par le biais d'un dispositif électronique d'interprétation (18) en même temps que la température et la densité du produit en vrac.

2. Procédé selon la revendication 1, **caractérisé en ce que** la détection des propriétés de la conduite se fait par un principe de mesure hétérodyne au moyen d'une unité de mesure à micro-ondes (45).

3. Procédé selon la revendication 1 ou 2, **caractérisé en ce qu'**une conduite de référence peut être ouverte parallèlement au capteur (20), en vue d'un étalonnage périodique ou une hausse de la précision de mesure, p.ex. pour éliminer des variations de température et de longueur.

4. Procédé selon l'une des revendications 1 à 3, **caractérisé en ce que** le capteur (20) ou conduite à trois plaquettes est réalisé comme une partie d'un canal de mesure (9) du trajet de mesure (8) séparé, en termes de technique de pesage, de parties d'installations fixes, et **en ce que** la densité de production (densité de vrac) du produit en vrac est mesurée par des signaux de pesage correspondants.

5. Dispositif pour la détermination continue de l'humidité d'un produit en vrac, en particulier pour des produits alimentaires pour êtres humains ou animaux, en fonctionnement en ligne, selon l'une des revendications 1 à 4, avec un canal de mesure (9) pour le transfert du produit en vrac ainsi qu'un élément de retenue situé côté sortie du canal de mesure (9), lequel présente une tige (21) comme élément d'un capteur (20) transversal à la direction d'écoulement du produit, des moyens (26) étant prévus pour mesurer les propriétés conductrices du capteur (20) rempli de produit en vrac ou du canal de mesure (9), des moyens pour la détection de température, un dispositif électronique d'interprétation et des moyens pour mesurer la valeur de la somme et/ou phase des micro-ondes transmises dans le produit en vrac, **caractérisé en ce que** le canal de mesure (9) est réalisé sous forme d'un by-pass (4), de conduite à trois plaquettes, et **en ce que** le canal de mesure (9) est réalisé sous forme de tronçon de bascule séparé, par des systèmes de technique de pesage, d'un canal de produit principal et d'autres éléments fixes.

6. Dispositif selon la revendication 5, **caractérisé en ce que** le canal de mesure (9) se voit associer, côté sortie, un élément d'évacuation (10, 11) pour l'évacuation forcée du produit en vrac.

7. Dispositif selon la revendication 6, **caractérisé en ce que** le tronçon de balance adopte la forme d'une balance à levier, un moteur d'entraînement (12) de l'élément d'évacuation étant placé pour agir d'un côté d'un levier (14) de la balance à levier, et le canal de mesure (9) pour agir de l'autre côté.

8. Dispositif selon l'une des revendications 5 à 7, **caractérisé en ce que** le canal de mesure (9) est partagé verticalement en deux tronçons, c.-à-d., en un tronçon de mesure supérieur et en un tronçon d'évacuation s'y raccordant en direction du bas, le tronçon de mesure allant en s'évasant du haut en bas, et le tronçon d'évacuation rétrécissant du haut en bas, le tronçon d'évacuation étant délimité vers le bas par un doseur d'évacuation à vis sans fin (10).

9. Dispositif selon l'une des revendications 5 à 8, **caractérisé en ce qu'**une conduite de raccordement allant du capteur (20) au dispositif électronique d'interprétation et par laquelle en combinaison avec la température et la densité du produit en vrac l'humidité de ce dernier est mesurée puis réglée, est réalisée sous forme de conduite coaxiale (19, 19') avec un entonnoir de transfert pour une adaptation sans réflexion de l'impédance du câble de la conduite coaxiale (19, 19') au capteur (20).

10. Dispositif selon la revendication 9, **caractérisé en ce que** le canal de mesure (9) est fabriqué en métal et **en ce que** l'entonnoir de transfert est recouvert par une couche (25, 25') perméable aux micro-ondes dans la transition allant au canal de mesure (9).

11. Dispositif selon l'une des revendications 5 à 10, **caractérisé en ce que** le canal de mesure (9) est réalisé sous forme de canal de dérivation (4) conduisant à un canal de produit principal (1) orienté d'oblique ou décalé et **en ce que** l'ouverture d'entrée du canal de produit principal (1) au canal de mesure (9) adopte la forme d'une grille.
